# EUROPEAN PATENT SPECIFICATION

(11) **EP 3 564 159 B1**
(45) Date of publication and mention of the grant of the patent: **29.09.2021**
(21) Application number: 17832588.2
(22) Date of filing: 27.12.2017
(51) Int. Cl.: B65D 85/804

(54) **CAPSULE WITH A PASSAGE AS RECESS AND SYSTEM FOR THE PRODUCTION OF EDIBLE PRODUCTS**
KAPSEL MIT EINEM REZESS ALS DURCHGANG UND SYSTEM ZU VERWENDUNG VON KAPSELN
CAPSULE AVEC UN RECESS COMME PASSAGE POUR LA PRODUTION DES PRODUITS EDIBLES ET SYSTEME EN L'UTILISANT

(30) Priority: 29.12.2016 PT 2016109816
(43) Date of publication of application: 06.11.2019
(73) Proprietor: Novadelta-Comércio e Industria de Cafés, Lda., 1950-041 Lisboa (PT)
(72) Inventor: NABEIRO, Rui Miguel, 7370-112 Campo Maior (PT); DE FIGUEIREDO BRANCO, João André, 1885-091 Moscavide (PT); MEDINA MUNDT, Jesús, 1800-098 Lisboa (PT)
(74) Representative: Ferreira Pinto, Francisca
(86) International application number: PCT/PT2017/050033
(87) International publication number: WO 2018/124901

(56) References cited:
- EP-A1- 0 521 510
- EP-A1- 2 287 090
- EP-A1- 2 757 057
- WO-A1-2008/125256
- WO-A1-2011/154666
- WO-A1-2016/087981

## Description

### Field of the invention

The present invention refers to the field of the capsules for preparing edible products including aromatic beverages, such s for example espresso coffee, tea and similar.

The present invention further refers to a system for preparing edible products based upon capsules.

### Background of the invention

The prior art includes several solutions relating to systems for preparing beverages, such as for example machines for preparing beverages including espresso coffee, tea and similar, based upon capsules containing a single portion of edible substance and provided so that are collected inside of a brewing device. Said brewing device is adapted so as to inject a pressurized fluid flow through an upstream side of capsule, and to collect the resulting beverage from a downstream side of capsule.

In particular in the case of capsules provided in a substantially rigid material and construction structure, despite being retained by means of pressured engagement inside of a respective brewing device, this type of capsules can slip a direction transversal to the prevailing flow direction, notably in a rotation movement around its axial axis, in particular in case that the pressurized water injection is not done by means of penetration of the capsule envelope. In fact, in the case of brewing devices with multiple pressurized water injection outlets, there is the need to ensure that a capsule of this type is retained in reliable manner, and eventually positioned on a given angular position, inside of a respective brewing device.

The document EP 2287090 B1 discloses a capsule comprising a container part with a base wall that presents a structure that forms a reduced thickness of entry wall of the pressurized fluid. In particular, said structure forms a continuous annular recess portion of radius R1 where there is provided a plurality of injection holes.

The document EP 2394932 B1 discloses a capsule similar to that of the aforementioned document, whereby in this case there is provided a weakened material region designed such that breaks at least partially under the pressure of a pressurized liquid. Moreover, the body of the capsule is made of plastic or from a plastic based material.

The document FR 2905683 A1 discloses a capsule provided with a recess of circular shape on the flow entry side, comprising a plurality of inlets for entry of pressurized water, so as to prevent the deterioration of the container as a result of perforation thereof. O document further discloses a pressured-fitting engagement between two construction elements of the capsule, provided on the top face that is opposite to the one where said recess is provided.

The document EP 1950150 B1 discloses means for recognizing contents of a capsule for preparing beverages. In particular, the capsule presents a plurality of recesses provided on a surface adapted for entry of flow and configured so as to engage with corresponding recognition means provided in the form of a mechanic displacement probe. Said mechanic probe means operate based upon a relative displacement, eventually subject to a major wear after a given operating period. This solution does not structurally reinforce the connection between the two main construction elements of the capsule.

The document EP 2757057 A1 discloses a capsule that presents a groove that surrounds the central region that presents at least one perforation zone with perforations that provide inlet of hot water to the interior of the capsule.

The document WO 2008/125256 A1 discloses a capsule comprising a lid part that can present at least one facilitated break formation for the entrance of water. Such formation does not develop along a circular alignment and does not correspond to a reduction of wall thickness, such that it does not result in a localized reduction of wall thickness along such circumferential alignment.

The document WO 2015/002562 A1 submitted by the author of the present application discloses a capsule comprising a lid-like element that presents at least one engagement groove disposed such that is surrounded by, or itself surrounds, a zone of said second construction element adapted for fluid passage. However, this engagement groove is provided in the proximity of lid perimeter, and provides a capsule that presents an additional resistance to the pressure forces to which it is submitted in a beverage preparation process, in particular in view of a reduction of wall thickness at least of the top wall and of a use of mechanic means of assembly of said construction elements, optimized so as to enable a manual closure of the capsule.

### General description of the invention

The objective of the present invention is to provide a capsule in a substantially rigid construction, for collection of a single portion of an edible substance, in particular adapted for preparing edible products, including beverages, inside of a respective brewing device, and that provides a better entry of pressurized flow through a respective upstream oriented wall.

This objective is solved by means of a capsule according to claim 1, and preferred embodiments are disclosed in the dependent claims.

In particular, the aforementioned objective is attained by means of a capsule that comprises lid-like construction element, presenting a flow entry wall part that presents a passageway wall provided as a recess of circular shape and further a recess region of ring shape provided on the upstream oriented side of said flow entry wall part, whereby said recess region develops from a second circumferential alignment in the proximity of said passageway wall and so that defines an intercalary region between said recess region and said passageway wall, whereby said recess region presents a recess wall thickness that is smaller than the prevailing wall thickness, and bigger than the passageway wall thickness of said passageway wall, so that structurally reinforces the region surrounding said passageway wall and provides retention surfaces for an engagement element provided on said brewing device.

This solution advantageously provides a retention of an engagement element of the brewing device in the vicinity region of said passageway wall and of a sealing element that surrounds the latter, so that improves the flow entry into the capsule.

The capsule according to the invention comprises a first construction element configured in a container-like form, and a second construction element configured in a lid-like form and adapted for entry of a pressurized fluid preferentially without holing of a respective exterior envelope, and adapted for joint assembly so as to provide an interior volume for collection of a portion of at least one edible substance, including coffee, tea and similar.

According to another inventive aspect, said intercalary region presents an intercalary wall thickness that is bigger than the passageway wall thickness of said passageway wall and bigger than the recess wall thickness of said recess region, preferentially is at least approximately similar to said prevailing wall thickness, thereby structurally reinforcing the region surrounding said weakened material region and providing a support surface to a sealing element provided on said brewing device.

This solution advantageously provides a support for a sealing element in the brewing device such that contains the pressurized fluid flow concentrate in the passageway wall of capsule, thereby improving the effectiveness of opening thereof.

An associated objective is to provide a capsule that provides better conditions of opening of a passageway wall presenting a weakened material region.

It is preferred when the upstream oriented surface of capsule presents a passageway wall provided as a recess region of circular shape on both sides of said flow entry wall part.

It is preferred when said passageway wall presents a passageway wall thickness that is smaller than said prevailing wall thickness, and the respective weakened material region is provided by means of localized reduction of said passageway wall thickness, so that results a region with a weakened thickness along said first circumferential alignment, thereby improving the opening of said passageway wall when impinged by an upstream pressurized flow.

It is preferred when said flow passageway wall is provided as a reduction of said prevailing wall thickness on a region of circular shape and disposed centred with relation to said flow entry wall part, and said weakened material region is provided between said prevailing wall thickness and said passageway wall thickness.

It is preferred when said passageway wall presents a passageway wall thickness that corresponds to a thickness reduction of said prevailing wall thickness of said flow entry wall part, provided on a region of circular shape and on both side of said flow entry wall part, so that said flow passageway wall develops on an intercalary plane between the exterior upstream and downstream oriented surfaces of said flow entry wall part.

Moreover, it is preferred when said passageway wall is surrounded downstream by a wall that extends beyond the plane defined by the wall thickness (e₃) of said flow entry wall part so that deflects the pressurized flow through the weakened material region, and in that at least said downstream surrounding wall, preferentially also an upstream surrounding wall of said passageway wall, develop along an oblique region relative to the direction of said axial axis (X).

It is preferred when said passageway wall is provided disposed closer to the upstream oriented surface than to the downstream oriented surface of said flow entry wall part.

It is preferred when said weakened material region is provided as the region between two recesses, on the upstream oriented side and on the downstream oriented side, of said passageway wall.

It is preferred when said weakened material region is provided as the region between two recesses in mutually opposing sides of said passageway wall, whereby said recesses present at least one of different shape and different dimension relative to the remaining passageway wall.

It is preferred when said weakened material region is provided as the region between two recesses in opposing sides of said passageway wall, developing along a circumferential alignment of at least approximately similar dimension, whereby in the region closest to each other said recesses distance of each other by a value corresponding to said weakened wall thickness.

It is preferred when said weakened material region is provided as the region between two recesses disposed in opposite side of said passageway wall, whereby said recesses present different depths relative to the surface planes of respective sides of said passageway wall, and said maximum depths develop in different projection along planes that are parallel to said axial axis (X).

It is preferred when said weakened material region is provided as the region between two recesses disposed in opposite sides of said passageway wall, whereby the recesses disposed on the upstream side develop at least partially on a more proximal region than the recesses disposed on the downstream oriented side, with reference to the axial axis (x) of said passageway wall.

It is preferred when said weakened material region is provided as the region between two recesses disposed in opposite sides of said passageway wall and presenting at least one oblique surface relative to the direction of said axial axis (X), whereby in the region closest to each other said recesses configure two surfaces oblique relative to the direction of said axial axis (X), and that develop at least approximately parallel along a rupture extension that presents said weakened material thickness and that develops oblique relative to the direction of said axial axis (X).

It is preferred when said weakened material region is provided along at least most part, preferentially the totality, of a circumferential perimeter and presents a first and a second weakened thickness, whereby said first weakened thickness is smaller than said second weakened thickness.

It is preferred when said weakened material region presents a first weakened thickness that develops along an arch of circumference comprised between 348° and 325°, preferentially between 345° and 328°.

It is preferred when said first weakened thickness is comprised between 0,05 and 0,20, preferentially between 0,10 and 0,15, of said passageway wall thickness of said passageway wall.

It is preferred when said passageway wall presents a projection element that develops upstream, whereby said projection element develops along an extension beyond the plane defined the upstream oriented surface of said flow entry wall part, so that can be impinged by a flow injection part of said brewing device.

It is preferred when said projection element is provided only on one side of said passageway wall relative to said axial axis (X), preferentially in the proximity of perimeter of said passageway wall.

It is preferred when said projection element develops along an extension comprised between 10 to 40°, preferentially between 15 and 35°, of the circumferential alignment that develops in at least approximately parallel manner relative to the circumferential alignment defined by the exterior limit of said passageway wall.

It is preferred when said projection element is provided in the proximity of the perimeter and on the side that develops in the weakened material region presenting a smaller wall thickness.

Another objective of the present invention is to provide a system for preparing edible products based upon capsules, presenting capsules and a brewing device adapted so as to improve the entry of flow into said capsules, in particular the concentration of pressurized flow on a passageway wall presenting a weakened material region.

This objective is solved according to claim 12, and preferred embodiments are disclosed in dependent claims.

An associated objective is to disclose a system that provides a better opening of a passageway wall presenting a weakened material region.

It is preferred when said injection means are provided as a projection developing downstream and adapted so that exerts a mechanic pressure upon part of said passageway wall in the proximity of said weakened material region, so that said passageway wall swivels downstream around a region of passageway wall opposite to said weakened material region as a result of said mechanic pressure.

It is preferred when said injection means are provided as a projection adapted so that at least part, preferentially at least most part of respective extension of projection develops inside the recess formed by said passageway wall on said flow entry wall part, when said brewing device is in a closed position.

It is preferred when said injection means are provided as a projection adapted so that exerts a mechanic pressure, preferentially in asymmetric manner, upon part of said passageway wall, in asymmetric manner relative to the form thereof and on a side opposite to that of a respective weakened material region.

It is preferred when said injection means are provided as a projection adapted so that exerts a mechanic pressure upon a projection element provided so that extends upstream and above and higher than said passageway wall, preferentially higher than said flow entry wall part.

### Description of the Figures

The present invention shall be hereinafter explained in greater detail based upon the description of preferred embodiments thereof and the Figures attached.

The Figures show, in simplified schematic representations:
- Figure 1:: plan view (top) and side cut (bottom) of a capsule (1) according to prior art;
- Figure 2:: plan view (top) and side cut (bottom) of a capsule (1) according to present invention;
- Figure 3:: side-cut view of a first embodiment of second construction element (3) (top), and detail of a respective central region (bottom), of a capsule (1) according to the invention;
- Figure 4:: plan view of the exterior face of second construction element (3) of the embodiment according to Figure 3;
- Figure 5:: side-cut view of a second embodiment of second construction element (3) (top), and detail of a respective central region (bottom), of a capsule (1) according to the invention;
- Figure 6:: plan view of the exterior face of second construction element (3) of the embodiment according to Figure 5;
- Figure 7:: side-cut view of a third embodiment of second construction element (3) (top), and detail of a respective central region (bottom), of a capsule (1) according to the invention;
- Figure 8:: plan view of the exterior face of second construction element (3) of the embodiment according to Figure 7;
- Figure 9:: side-cut view of a fourth embodiment of second construction element (3) (top), and detail of a respective central region (bottom), of a capsule (1) according to the invention;
- Figure 10:: plan view of the exterior face of second construction element (3) of the embodiment according to Figure 9;
- Figure 11:: side cut views of a capsule (1) inside of a brewing device (10) in open position (left-hand side) and in closed position (right-hand side), of a system according to the present invention;
- Figure 12:: front view of the upstream actuation part (11) of a brewing device (10) of a system according to the invention.

### Detailed description of the invention

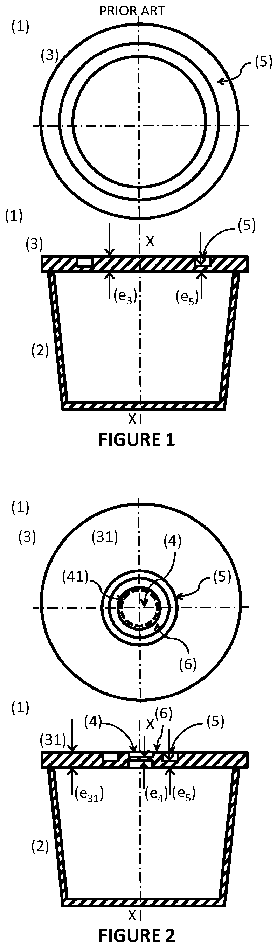

**Figure 1** represents a capsule (1) according to prior art, including a first construction element (2) configured in a container-like shape and a second construction element (3) configured in a lid-like shape. Said first and second construction elements (2, 3) are provided as substantially rigid, for example in a plastic material, and adapted for joint assembly along a common central axis (X) of said capsule (1), thereby providing an interior volume adapted for collection of a single portion of at least one edible substance, such as for example roasted ground coffee beans.

Said second construction element (3) presents a wall thickness (e₃) and a recess region (5) of ring shape in the upstream oriented surface thereof, whereby said recess region (5) presents a recess wall thickness (e₅) that is smaller than said wall thickness (e₃).

Moreover, said second construction element (3) comprises a flow entry wall part (31) that presents a generally disk-like shape with a prevailing wall thickness (e₃₁) defined between two planes transversal relative to an axial axis (X) of said flow entry wall part (31), whereby said flow entry wall part (31) is provided in a rigid material.

In the case of a capsule (1) according to the present invention (see **Figure 2**), said recess region (5) is provided in the proximity of a passageway wall (4) provided with a circular shape that is delimited by a first circumferential alignment and disposed in centred manner relative to the axial (X) axis of said flow entry wall part (31), whereby said passageway wall (4) presents a weakened material region (41) that develops along at least most part of said first circumferential alignment and is adapted so that breaks when impinged by a pressurized upstream flow at a predetermined flow pressure.

In particular, according to an inventive aspect, said recess region (5) develops from a second circumferential alignment in the proximity of said passageway wall (4) and so that defines an intercalary region (6) between said recess region (5) and said passageway wall (4), whereby said recess region (5) presents a recess wall thickness (e₅) that is smaller than the prevailing wall thickness (e₃₁), and bigger than the passageway wall thickness (e₄) of said passageway wall (4), so that structurally reinforces the region surrounding said passageway wall (4) and provides retention surfaces for an engagement element (15) provided on said brewing device (10) - as shall be described in greater detail further below.

Moreover, according to another inventive aspect, said intercalary region (6) between said passageway wall (4) and said recess region (5), presents an intercalary wall thickness (e₆) that is bigger than the passageway wall thickness (e₄) of said passageway wall (4) and bigger than the recess wall thickness (e₅) of said recess region (5), preferentially is at least approximately similar to said prevailing wall thickness (e₃₁), thereby structurally reinforcing the region surrounding said weakened material region (41) and providing a support surface to a sealing element (14) provided on said brewing device (10).

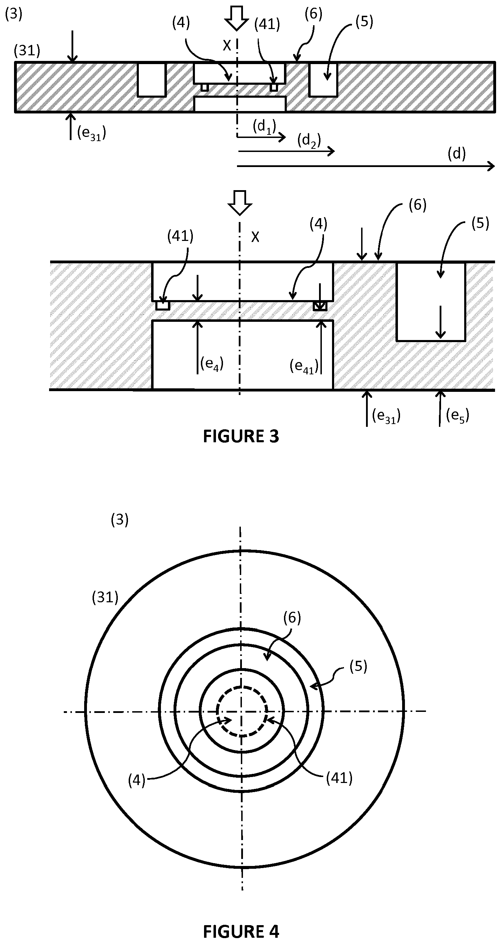

As can be better observed in **Figures 3** and **4****,** at least most part, preferentially the totality, of recess thickness (e₅) of said recess region (5) develops between transversal planes in the proximity downstream of the transversal planes that delimit the passageway wall thickness (e₄) of said passageway wall (4), so that at least most part of said recess thickness (e₅) is provided downstream of said passageway wall thickness (e₄).

It is herewith provided a structural reinforcement of the region that surrounds said weakened material region (41), thereby advantageously improving the opening behaviour thereof as impinged by an upstream force.

In this respect, it is further preferred when said passageway wall (4) is delimited by a first circumferential alignment that presents a first diameter (d₁) smaller than 0,35 times the diameter (d) of said flow entry wall part (31), and when said recess region (5) is delimited on a respective distal side by a circumferential alignment presenting a second diameter (d₂), whereby said second diameter (d₂) is at least 1,2 times bigger, preferentially at least 1,4 times bigger, and at most 2,5 times bigger, preferentially at most 2 times bigger than said first diameter (d₁).

It has revealed itself as particularly advantageous when the radial extension of said recess region (5) is at least approximately similar, preferentially bigger than 0,8 times and smaller than 1,2 times the radial extension of said intercalary region (6).

Moreover, it is preferred when said recess region (5) presents a substantially polygonal transversal section defining at least three interior surfaces, preferentially five interior surfaces, and presenting a depth between 1 and 3 mm, preferentially between 1,5 and 2,5 mm, relative to the exterior surface of said second construction element (3), and a radial dimension between 1 and 3 mm, preferentially between 1,5 and 2,5 mm.

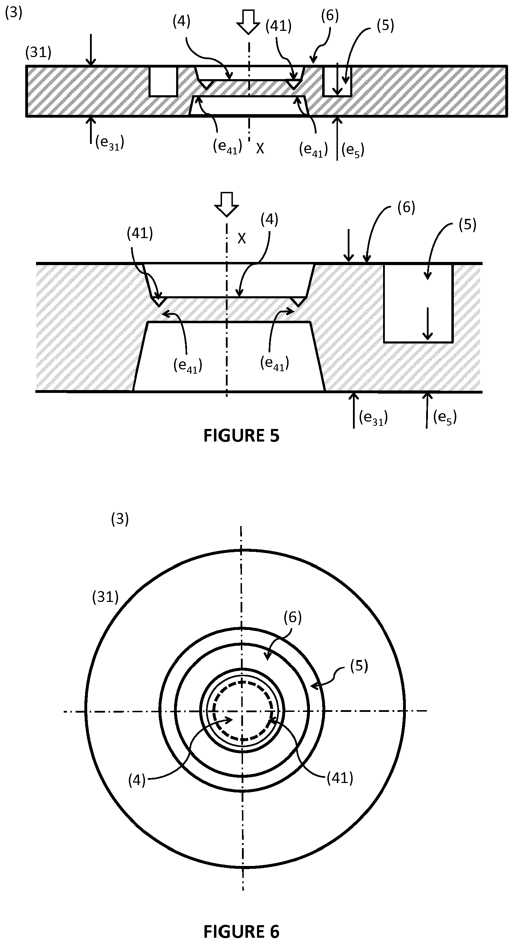

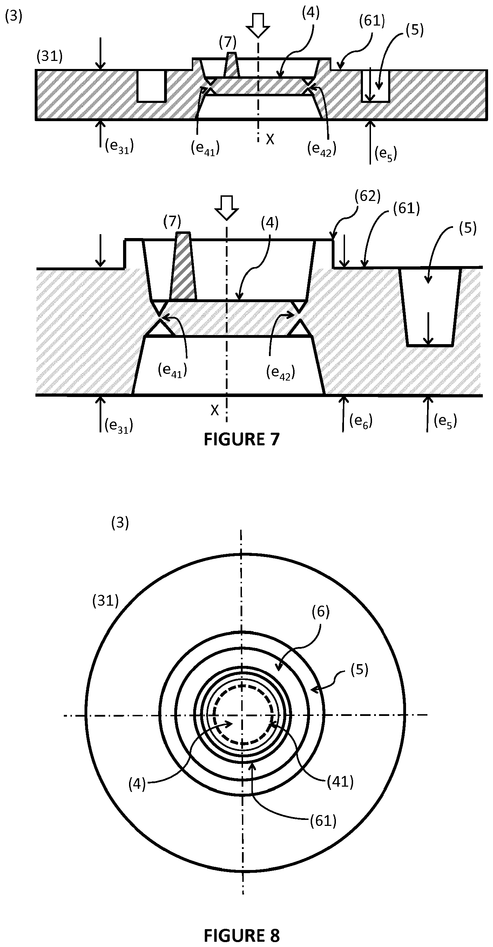

According to a preferred embodiment, represented in **Figures 6** and **7****,** said recess region (5) presents a cross-section of trapezoidal shape with two inclined side surfaces.

Moreover, said intercalary region (6) presents an intercalary wall thickness (e₆) that develops between planes transversal to the axial direction upstream and downstream of the transversal planes that delimit said passageway wall thickness (e₄) and recess wall thickness (e₅) .

In particular, as can be better observed in **Figure 7****,** said intercalary region (6) comprises a seat region (61) that develops in the upstream oriented surface of said flow entry wall part (31) along at least most part of the radial extension between said passageway wall (4) and said recess region (5), whereby said seat region (61) is adapted so that provides a seat surface to a sealing element (14) provided on said brewing device (10), as shall be described in greater detail further below.

It is further preferred when said seat region (61) presents a seat wall thickness (e₆₁) that is bigger than the passageway wall thickness (e₄) of said passageway wall (4), thereby improving the opening of said weakened material region (41) as impinged by an upstream pressurized flow.

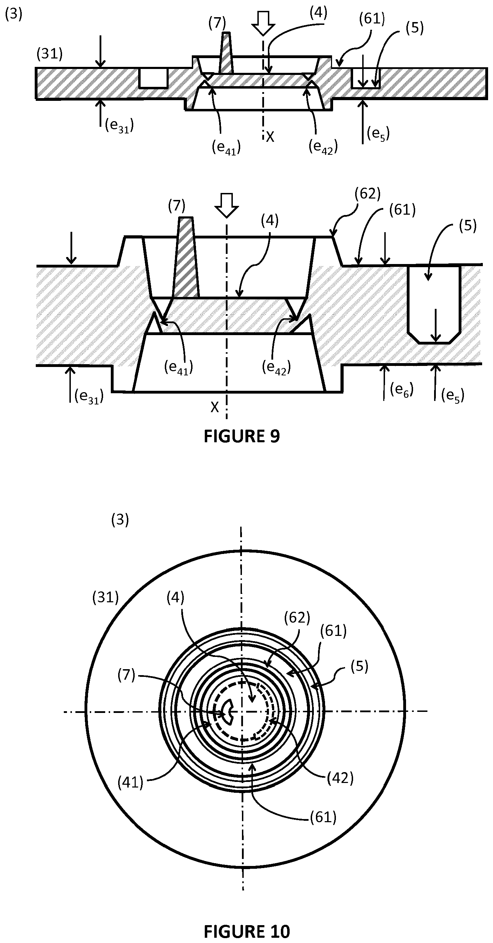

In the case of a fourth preferred embodiment (see **Figures 8** and **9**) of capsule (1), said recess region (5) presents a cross-section of regular polygonal shape with four side surfaces whereby at least two thereof are inclined.

As can be better observed in **Figure 9****,** said seat region (61) presents a seat wall thickness (e₆₁) that is bigger than the recess wall thickness (e₅) of said recess region (5), preferentially presents a wall thickness that is at least approximately similar to said prevailing wall thickness (e₃₁) .

Moreover, it is further preferred when said intercalary region (6) presents a guiding projection (62) along said first circumferential alignment so that delimits said seat region (61) relative to said passageway wall (4), whereby said guiding projection (62) projects beyond the upstream oriented exterior surface of said flow entry wall part (31), so that provides a conduction surface that is adjacent and substantially orthogonal or oblique relative to the surface provided by said seat region (61).

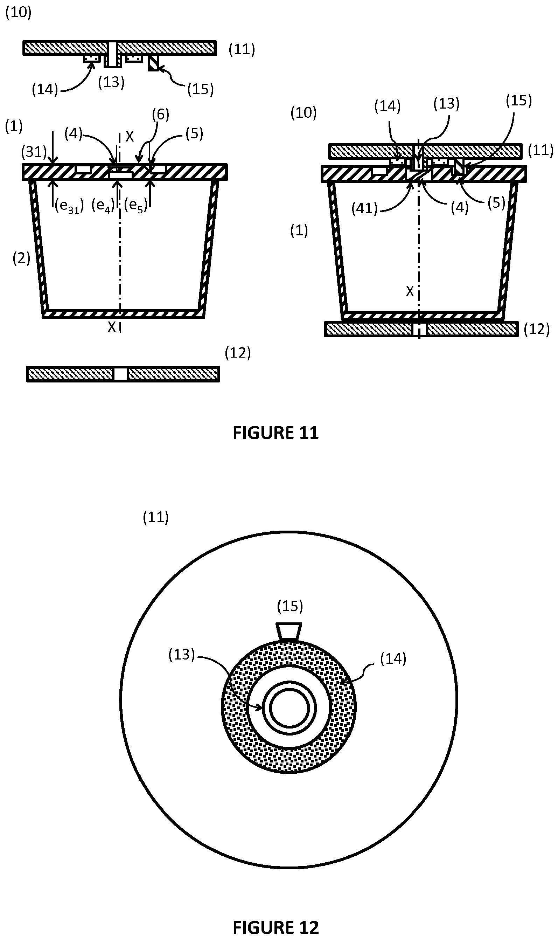

As represented in **Figure 11****,** a system for preparing edible products, in particular beverages, comprises a capsule (1) adapted for containing a single portion of an edible substance, an apparatus for preparing edible products based upon said capsule (1) and including at least one brewing device (10) that presents two actuation parts (11, 12).

It is known from prior art that said actuation parts (11, 12) are adapted so as to collect said capsule (1) and that at least one of said actuation parts (11, 12) can be moved relative to the other so as to engage with the exterior envelope of said capsule (1), an upstream actuation part (11) comprises injection means (13) adapted for impinging a pressurized fluid flow upon said passageway wall (4) provided on an upstream oriented side of said capsule (1), whereby a downstream actuation part (12) comprises discharge means adapted for collecting a beverage from the downstream oriented side of said capsule (1).

Moreover, said upstream actuation part (11) presents a sealing element (14) and one engagement element (15) adapted so as to cooperate with respective regions of flow entry wall part (31) of said capsule (1).

According to an inventive aspect, said upstream actuation part (11) further presents an engagement element (15) provided as a protuberance that develops at a distance from said injection means (13) and is adapted so that engages with said recess region (5) provided on said flow entry wall part (31), so as to retain said capsule (1) with relation to a sealing element (14) provided so that surrounds said injection means (13).

As can be better observed in the drawing on the right-hand side of **Figure 11****,** when the brewing device (10) is in a closed position, said injection means (13) are in the interior of recess of said flow entry wall part (31) associated with said passageway wall (4), in particular so that exert a mechanic pressure upon at least part thereof. Said engagement element (15) is in engagement by means of fitting in the recess region (5) of capsule (1), thereby improving the retention and structural reinforcement of said passageway wall (4).

As can be observed in **Figure 12****,** it is preferred when said engagement element (13) is provided so that develops along an extension of arch of circumference smaller than 20°, preferentially smaller than 15°, and bigger than 3°, preferentially bigger than 5°.

According to another inventive aspect, said sealing element (14) is provided in "O-ring" shape, or similar, in the proximity of said injection means (13) and adapted so as to confine the pressurized fluid flow to the region adjacent to the injection means (13), preferentially so as to additionally conduct said pressurized flow until imping said passageway wall (4) provided in recess relative to said flow entry wall part (31).

Moreover, it is preferred when said sealing element (14) is provided with a ring shape and adapted so that sits on the seat region (61) of said intercalary region (6) between said passageway wall (4) and recess region (5) .

It is further preferred when said sealing element (14) is provided as a projection that develops along the axial direction with a smaller extension than the extension of said engagement element (15).

As one can again better observe in the drawing on the right-hand side of Figure 11, said sealing element (14) ensures conditions of substantial sealing to liquid in the adjacent region, so that the pressurized flow is concentrated in said passageway wall (4), thereby in particular improving the reliability of rupture of respective weakened material region (41).

## Claims

1. Capsule (1) for preparing an edible product on a brewing device (10), and presenting:
- a first construction element (2) configured in a container-like form and adapted so as to provide a collection volume for a single portion of an edible substance, and
- a second construction element (3) configured in a circular lid-like form, and adapted so as to confine said collection volume of first construction element (2) and as to provide an entry flow passageway to the interior of said first construction element (2),
whereby said second construction element (3) comprises a flow entry wall part (31) that presents a disk-like general with a prevailing wall thickness (e₃₁) between two plane transversal relative to an axial axis (X) of said flow entry wall part (31),
whereby said flow entry wall part (31) is provided in a rigid material,
whereby said flow entry wall part (31) comprises a passageway wall (4) provided with a circular shape delimited by a first circumferential alignment and disposed centred relative to an axial axis (X) of said capsule (1),
whereby said flow passageway wall (4) presents a weakened material region (41) that develops along at least most part of said first circumferential alignment and that is adapted so that breaks under a given upstream flow pressure,
whereby said flow entry wall part (31) presents a recess region (5) that develops in the upstream direction from the upstream oriented surface of said flow entry wall part (31),
said capsule (1) being **characterized**
**in that** said recess region (5) develops from a second circumferential alignment in the proximity of said passageway wall (4) and so that defines an intercalary region (6) between said recess region (5) and said passageway wall (4), whereby said recess region (5) presents a recess wall thickness (e₅) that is smaller than the prevailing wall thickness (e₃₁), and bigger than the passageway wall thickness (e₄) of said passageway wall (4).

2. Capsule (1) according to claim 1,
**characterized in that** at least part, preferentially the totality, of recess thickness (e₅) of said recess region (5) develops between transversal planes in the proximity downstream of the transversal planes that delimit the passageway wall thickness (e₄) of said passageway wall (4), so that at least most part of said recess thickness (e₅) is provided downstream of said passageway wall thickness (e₄) .

3. Capsule (1) according to claims 1 or 2,
**characterized in that** said passageway wall (4) is delimited by a first circumferential alignment that presents a first diameter (d₁) smaller than 0,35 times the diameter (d) of said flow entry wall part (31), and **in that** said recess region (5) is delimited on a respective distal side by a circumferential alignment presenting a second diameter (d₂), whereby said second diameter (d₂) is at least 1,2 times bigger, preferentially at least 1,4 times bigger, and at most 2,5 times bigger, preferentially at most 2 times bigger than said first diameter (d₁).

4. Capsule (1) according to claims 1 to 3, **characterized in that** the radial extension of said recess region (5) is similar, preferentially bigger than 0,8 times and smaller than 1,2 times the radial extension of said intercalary region (6).

5. Capsule (1) according to claims 1 to 4, **characterized in that** said recess region (5) presents a substantially polygonal transversal section defining at least three interior surfaces, preferentially five interior surfaces, and presenting a depth between 1 and 3 mm, preferentially between 1,5 and 2,5 mm, relative to the exterior surface of said second construction element (3), and a radial dimension between 1 and 3 mm, preferentially between 1,5 and 2,5 mm.

6. Capsule (1) according to any one of previous claims 1 to 5, **characterized in that** said intercalary region (6) presents an intercalary wall thickness (e₆) that is bigger than the passageway wall thickness (e₄) of said passageway wall (4) and bigger than the recess wall thickness (e₅) of said recess region (5), preferentially is at least approximately similar to said prevailing wall thickness (e₃₁), thereby structurally reinforcing the region surrounding said weakened material region (41) and providing a support surface to a sealing element (14) provided on said brewing device (10).

7. Capsule (1) according to any one of previous claims 1 to 6, **characterized in that** said intercalary region (6) presents an intercalary wall thickness (e₆) that develops between planes transversal to the axial direction upstream and downstream of the transversal planes that delimit said passageway wall thickness (e₄) and recess wall thickness (e₅).

8. Capsule (1) according to any one of previous claims 1 to 7, **characterized in that** said intercalary region (6) comprises a seat region (61) that develops in the upstream oriented surface of said flow entry wall part (31) along at least most part of the radial extension between said passageway wall (4) and said recess region (5), whereby said seat region (61) is adapted so that provides a seat surface to a sealing element (14) provided on said brewing device (10).

9. Capsule (1) according to any one of previous claims 1 to 8, **characterized in that** said seat region (61) presents a seat wall thickness (e₆₁) that is bigger than the passageway wall thickness (e₄) of said passageway wall (4), thereby improving the opening of said weakened material region (41) as impinged by an upstream pressurized flow.

10. Capsule (1) according to any one of previous claims 1 to 9, **characterized in that** said seat region (61) presents a seat wall thickness (e₆₁) that is bigger than the recess wall thickness (e₅) of said recess region (5), preferentially presents a wall thickness that is at least approximately similar to said prevailing wall thickness (e₃₁).

11. Capsule (1) according to any one of previous claims 1 to 10, **characterized in that** said intercalary region (6) presents a guiding projection (62) along said first circumferential alignment so that delimits said seat region (61) relative to said passageway wall (4), whereby said guiding projection (62) projects beyond the upstream oriented exterior surface of said flow entry wall part (31), so that provides a conduction surface that is adjacent and substantially orthogonal or oblique relative to the surface provided by said seat region (61).

12. **System** for preparing edible products comprising:
- a capsule (1) according to claims 1 to 11, adapted for containing a single portion of an edible substance, and
- an apparatus for preparing edible products based upon said capsule (1) and including at least one brewing device (10) that presents two actuation parts (11, 12),
whereby said capsule (1) presents an upstream oriented flow entry wall part (31) that presents a passageway wall (4) of circular shape and disposed centred relative to an axial axis (X) of said capsule (1), and successively surrounded by an intercalary region (6) and a recess region (5),
whereby said actuation parts (11, 12) are adapted so as to collect said capsule (1), and at least one of said actuation parts (11, 12) can be moved relative to the other so as to engage with the exterior envelope of said capsule (1),
whereby an upstream actuation part (11) comprises injection means (13) adapted for impinging a pressurized fluid flow upon said passageway wall (4) provided on an upstream oriented side of said capsule (1),
whereby a downstream actuation part (12) comprises discharge means adapted for collecting a beverage from the downstream oriented side of said capsule (1), whereby said upstream actuation part (11) presents a sealing element (14) and one engagement element (15) adapted so as to cooperate with respective regions of said flow entry wall part (31) of capsule (1), and said system being **characterized**
**in that** said upstream actuation part (11) presents an engagement element (15) provided as a protuberance that develops at a distance from said injection means (13) and adapted so that engages on said recess region (5) provided on said flow entry wall part (31), so as to retain said capsule (1) with relation to a sealing element (14) provided so that surrounds said injection means (13).

13. System according to claim 12, **characterized in that** said engagement element (13) is provided so that develops along an extension of arch of circumference smaller than 20°, preferentially smaller than 15°, and bigger than 3°, preferentially bigger than 5°.

14. System according to claims 12 or 13, **characterized in that** said sealing element (14) is provided in "O-ring" shape, or similar, in the proximity of said injection means (13) and adapted so as to confine the pressurized fluid flow to the region adjacent to the injection means (13), preferentially so as to additionally conduct said pressurized flow until imping said passageway wall (4) provided in recess relative to said flow entry wall part (31).

15. System according to any of claims 12 to 14, **characterized in that** said sealing element (14) is provided with a ring shape and adapted so that sits on the seat region (61) of said intercalary region (6) between said passageway wall (4) and recess region (5).

16. System according to any of claims 12 to 15, **characterized in that** said sealing element (14) is provided as a projection that develops along the axial direction with a smaller extension than the extension of said engagement element (15).

## Patentansprüche

1. Kapsel (1) zum Zubereiten eines essbaren Produkts in einer Brühvorrichtung (10), und aufweisend:
- ein erstes Konstruktionselement (2), das in einer behälterartigen Form ausgebildet ist und so angepasst ist, dass es ein Sammelvolumen für eine einzelne Portion einer essbaren Substanz bereitstellt, und
- ein zweites Konstruktionselement (3), das in einer kreisförmigen deckelähnlichen Form ausgebildet ist und so angepasst ist, dass es das gennante Sammelvolumen des ersten Konstruktionselements (2) begrenzt und einen Eintrittsdurchflussdurchgang in das Innere des ersten Konstruktionselements (2) bereitstellt,
wobei das gennante zweite Konstruktionselement (3) einen Durchflusseintrittswandteil (31) umfasst, der ein scheibenähnliches Allgemeinbild mit einer vorherrschenden Wandstärke (e₃₁) zwischen zwei Ebenen quer zu einer axialen Achse (X) des gennanten Durchflusseintrittswandteils (31) aufweist,
wobei der gennante Durchflusseintrittswandteil (31) aus einem starren Material besteht,
wobei der gennante Durchflusseintrittswandteil (31) eine Durchgangswand (4) umfasst, die in einer kreisförmigen Form ausgebildet ist, die durch eine erste Umfangsausrichtung begrenzt ist und zentriert in Bezug auf eine axiale Achse (X) der gennanten Kapsel (1) angeordnet ist,
wobei die gennante Durchflussdurchgangswand (4) einen Bereich mit geschwächtem Material (41) aufweist, der sich zumindest entlang des grössten Teils der ersten Umfangsausrichtung entwickelt und der so angepasst ist, dass er unter einem gegebenen stromaufwärtigen Durchflussdruck bricht,
wobei der gennante Durchflusseintrittswandteil (31) einen Vertiefungsbereich (5) aufweist, der sich in der stromaufwärtigen Richtung von der stromaufwärts orientierten Oberfläche des gennanten Durchflusseintrittswandteils (31) entwickelt,
wobei die gennante Kapsel (1) **dadurch gekennzeichnet ist, dass** sich der gennante Vertiefungsbereich (5) aus einer zweiten Umfangsausrichtung in der Nähe der gennanten Durchgangswand (4) entwickelt und so einen Zwischenbereich (6) zwischen dem gennanten Vertiefungsbereich (5) und der gennanten Durchgangswand (4) definiert, wobei der gennante Vertiefungsbereich (5) eine Vertiefungswandstärke (e₅) aufweist, die kleiner als die vorherrschende Wandstärke (e₃₁) und grösser als die Durchgangswandstärke (e₄) der gennanten Durchgangswand (4) ist.

2. Kapsel (1) nach Anspruch 1,
**dadurch gekennzeichnet, dass** sich zumindest ein Teil, vorzugsweise die Gesamtheit, der Vertiefungsstärke (e₅) des gennanten Vertiefungsbereichs (5) sich zwischen Querebenen in der Nähe stromabwärts der Querebenen, die die Durchgangswandstärke (e₄) der gennanten Durchgangswand (4) begrenzen, entwickelt, so dass zumindest der grösste Teil der gennanten Vertiefungstärke (e₅) stromabwärts der gennanten Durchgangswandstärke (e₄) bereitgestellt wird.

3. Kapsel (1) nach Anspruch 1 oder 2,
**dadurch gekennzeichnet, dass** die gennante Durchgangswand (4) durch eine erste Umfangsausrichtung begrenzt ist, die einen ersten Durchmesser (d₁) aufweist, der 0,35-mal kleiner als der Durchmessers (d) des gennanten Durchflusseintrittswandteils (31) ist, und dadurch, dass der gennante Vertiefungsbereich (5) auf einer jeweiligen distalen Seite durch eine Umfangsausrichtung begrenzt ist, die einen zweiten Durchmesser (d₂) aufweist, wobei der gennante zweite Durchmesser (d₂) mindestens 1,2-mal grösser, vorzugsweise mindestens 1,4-mal grösser und höchstens 2,5-mal grösser, vorzugsweise höchstens 2-mal grösser als der erste Durchmesser (d₁) ist.

4. Kapsel (1) nach den Ansprüchen 1 bis 3, **dadurch gekennzeichnet, dass** die radiale Erstreckung des gennanten Vertiefungsbereichs (5) zumindest annähernd gleich ist, vorzugsweise 0,8-mal grösser und 1,2-mal kleiner als die radiale Erstreckung des gennanten Zwischenbereichs (6).

5. Kapsel (1) nach einem der vorhergehenden Ansprüche 1 bis 4, **dadurch gekennzeichnet, dass** der gennante Vertiefungsbereich (5) einen im Wesentlichen polygonalen Querschnitt aufweist, der mindestens drei Innenflächen, vorzugsweise fünf Innenflächen, definiert und eine Tiefe zwischen 1 mm und 3 mm, vorzugsweise zwischen 1,5 mm und 2,5 mm, aufweist, in Bezug auf die Aussenfläche des gennanten zweiten Konstruktionselements (3), und eine radiale Abmessung zwischen 1 mm und 3 mm, vorzugsweise zwischen 1,5 mm und 2,5 mm.

6. Kapsel (1) nach einem der vorhergehenden Ansprüche 1 bis 5, **dadurch gekennzeichnet, dass** der Zwischenbereich (6) eine Zwischenwandstärke (e₆) aufweist, die grösser als die Durchgangswandstärke (e₄) der gennanten Durchgangswand (4) und grösser als die Vertiefungswandstärke (e₅) des gennanten Vertiefungsbereichs (5) ist, vorzugsweise zumindest annähernd gleich der gennanten vorherrschenden Wandstärke (e₃₁) ist, wodurch der Bereich, der den Bereich aus geschwächtem Material (41) umgibt, strukturell verstärkt wird und eine Stützfläche zu einem an der gennanten Brühvorrichtung (10) vorgesehenen Dichtungselement (14) bereitgestellt wird.

7. Kapsel (1) nach einem der vorhergehenden Ansprüche 1 bis 6, **dadurch gekennzeichnet, dass** der gennante Zwischenbereich (6) eine Zwischenwandstärke (e₆) aufweist, die sich zwischen Ebenen quer zur axialen Richtung stromaufwärts und stromabwärts der Querebenen, die die Durchgangswandstärke (e₄) und die Vertiefungswandstärke (e₅) begrenzen, entwickelt.

8. Kapsel (1) nach einem der vorhergehenden Ansprüche 1 bis 7, **dadurch gekennzeichnet, dass** der gennante Zwischenbereich (6) einen Sitzbereich (61) umfasst, der sich in der stromaufwärts orientierten Oberfläche des gennanten Durchflusseintrittswandteils (31) entlang zumindest des grössten Teils der radialen Erstreckung zwischen der gennanten Durchgangswand (4) und dem gennanten Vertiefungsbereich (5) entwickelt, wobei der Sitzbereich (61) so angepasst ist, dass er eine Sitzfläche für ein an der Brühvorrichtung (10) vorgesehenes Dichtungselement (14) bereitstellt.

9. Kapsel (1) nach einem der vorhergehenden Ansprüche 1 bis 8, **dadurch gekennzeichnet, dass** der gennante Sitzbereich (61) eine Sitzwandstärke (e₆₁) aufweist, die grösser als die Durchgangswandstärke (e₄) der gennanten Durchgangswand (4) ist, wodurch die Öffnung des Bereichs aus geschwächtem Material (41) verbessert wird, wenn sie von einem stromaufwärts druckbeaufschlagten Durchfluss beaufschlagt wird.

10. Kapsel (1) nach einem der vorhergehenden Ansprüche 1 bis 9, **dadurch gekennzeichnet, dass** der gennante Sitzbereich (61) eine Sitzwandstärke (e₆₁) aufweist, die grösser als die Vertiefungswandstärke (e₅) des gennanten Vertiefungsbereichs (5) ist, vorzugsweise eine Wandstärke aufweist, die annähernd gleich der gennanten vorherrschenden Wandstärke (e₃₁) ist.

11. Kapsel (1) nach einem der vorhergehenden Ansprüche 1 bis 10, **dadurch gekennzeichnet, dass** der gennante Zwischenbereich (6) einen Führungsvorsprung (62) entlang der ersten Umfangsausrichtung aufweist, so dass er den Sitzbereich (61) in Bezug auf die Durchgangswand (4) begrenzt, wobei der Führungsvorsprung (62) über die stromaufwärts orientierte Aussenfläche des gennanten Durchflussseintrittswandteils (31) hinausragt, so dass eine Leitfläche, die benachbart und im Wesentlichen orthogonal oder schräg in Bezug auf die durch den Sitzbereich (61) bereitgestellte Fläche ist, bereitgestellt wird.

12. **System** zur Zubereitung von essbaren Produkten, umfassend:
- eine Kapsel (1) nach Ansprüchen 1 bis 11, die dazu angepasst ist, eine einzelne Portion einer essbaren Substanz zu enthalten, und
- eine Vorrichtung zum Zubereiten von essbaren Produkten auf der Grundlage der gennanten Kapsel (1) und mit mindestens einer Brühvorrichtung (10), die zwei Betätigungsteile (11, 12) aufweist,
wobei die gennante Kapsel (1) einen stromaufwärts orientierten Durchflusseintrittswandteil (31) aufweist, der eine Durchgangswand (4) von kreisförmiger Form aufweist und zentriert in Bezug auf eine axiale Achse (X) der gennanten Kapsel (1) angeordnet ist, und nacheinander von einem Zwischenbereich (6) und einem Vertiefungsbereich (5) umgeben ist,
wobei die gennanten Betätigungsteile (11, 12) zum Aufnehmen der Kapsel (1) ausgebildet sind und mindestens eines der gennanten Betätigungsteile (11, 12) in Bezug auf das andere bewegbar ist, um mit der äusseren Hülle der gennanten Kapsel (1) in Eingriff zu treten,
wobei ein stromaufwärts gelegenes Betätigungsteil (11) eine Injektionseinrichtung (13) umfasst, die dazu angepasst ist, einen druckbeaufschlagten Fluiddurchfluss auf die Durchgangswand (4) auftreffen zu lassen, der auf der stromaufwärts orientierten Seite der gennanten Kapsel (1) vorgesehen ist,
wobei ein stromabwärtiger Betätigungsteil (12) eine Abgabeeinrichtung umfasst, die zum Sammeln eines Getränks auf der stromabwärts orientierten Seite der gennanten Kapsel (1) angepasst ist,
wobei das gennante stromaufwärts gelegene Betätigungsteil (11) ein Dichtungselement (14) und ein Eingriffselement (15) aufweist, die so angepasst sind, dass sie mit jeweiligen Bereichen des gennanten Durchflusseintrittswandteils (31) der Kapsel (1) zusammenwirken, und
wobei das System **dadurch gekennzeichnet ist,**
**dass** das gennante stromaufwärts gelegene Betätigungsteil (11) ein Eingriffselement (15) aufweist, das als Vorsprung ausgebildet ist, der sich in einem Abstand von der gennanten Injektionseinrichtung (13) entwickelt und so angepasst ist, dass er in den gennanten Vertiefungsbereich (5), der an dem gennanten Durchflusseintrittswandteil (31) vorgesehen ist, eingreift, um die Kapsel (1) in Bezug auf ein Dichtungselement (14) zu halten, das so vorgesehen ist, dass es die gennante Injektionseinrichtung (13) umgibt.

13. System nach Anspruch 12, **dadurch gekennzeichnet, dass** das gennante Eingriffselement (13) so vorgesehen ist, dass es sich entlang einer Umfangsbogenerstreckung kleiner als 20°, vorzugsweise kleiner als 15°, und grösser als 3°, vorzugsweise grösser als 5°, entwickelt.

14. System nach Anspruch 12 oder 13, **dadurch gekennzeichnet, dass** das Dichtungselement (14) in "O-Ring"-Form oder ähnlichem in der Nähe der gennanten Injektionseinrichtung (13) vorgesehen ist und so angepasst ist, dass es den druckbeaufschlagten Fluiddurchfluss auf den Bereich neben der Injektionseinrichtung (13) begrentzt, vorzugsweise um zusätzlich den gennanten druckbeaufsclagten Durchfluss zu leiten, bis er auf die Durchgangswand (4), die in einer Vertiefung in Bezug auf den gennanten Durchflusseintrittswandteil (31) vorgesehen ist, auftrifft.

15. System nach einem der Ansprüche 12 bis 14, **dadurch gekennzeichnet, dass** das Dichtungselement (14) ringförmig ausgebildet ist und so angepasst ist, dass es auf dem Sitzbereich (61) des gennanten Zwischenbereichs (6) zwischen der Durchgangswand (4) und dem Vertiefungsbereich (5) aufsitzt.

16. System nach einem der Ansprüche 12 bis 15, **dadurch gekennzeichnet, dass** das Dichtungselement (14) als ein sich in axialer Richtung mit geringerer Erstreckung als die Erstreckung des gennanten Eingriffselements (15) verlaufender Vorsprung vorgesehen ist.

## Revendications

1. Capsule (1) pour la préparation d'un produit comestible dans un dispositif de brassage (10) et présentant ce qui suit :
- un premier élément de construction (2) configuré sous une forme de type conteneur et adapté afin de fournir un volume de collecte pour une unique portion d'une substance comestible et
- un second élément de construction (3) configuré sous une forme de type couvercle et adapté afin de confiner ledit volume de collecte du premier élément de construction (2) et afin de fournir un passage de flux d'entrée à l'intérieur dudit premier élément de construction (2),
où ledit second élément de construction (3) comprend une partie de paroi d'entrée de flux (31) qui présente une forme générale de type disque avec une épaisseur de paroi dominante (e₃₁) entre deux plans transversaux par rapport à un axe axial (X) de ladite partie de paroi d'entrée de flux (31),
où ladite partie de paroi d'entrée de flux (31) est fournie dans un matériau rigide,
où ladite partie de paroi d'entrée de flux (31) comprend une paroi de passage (4) fournie sous une forme circulaire délimitée par un premier alignement circonférentiel et disposé de manière centrée, par rapport à un axe axial (X) de ladite capsule (1), où ladite paroi de passage de flux (4) présente une région de matériau affaibli (41) qui se développe le long d'au moins la plupart dudit premier alignement circonférentiel et qui est adapté pour casser sous la pression donnée du flux en amont,
où ladite partie de paroi d'entrée de flux (31) présente une région de cavité (5) qui se développe dans la direction en amont depuis la surface orientée en amont de ladite partie de paroi d'entrée de flux (31),
ladite capsule (1) **se caractérisant**
**par le fait que** ladite région de cavité (5) se développe depuis un second alignement circonférentiel à proximité de ladite paroi de passage (4) et définissant ainsi une région intercalaire (6) entre ladite région de cavité (5) et ladite paroi de passage (4), où ladite région de cavité (5) présente une épaisseur de paroi de cavité (e₅) qui est inférieure que l'épaisseur de paroi dominante (e₃₁) et supérieure à l'épaisseur de paroi de passage (e₄) de ladite paroi de passage (4).

2. Capsule (1) selon la revendication 1,
**caractérisée par le fait qu'**au moins une partie, de préférence la totalité de l'épaisseur de la cavité (e₅) de ladite région de cavité (5) se développe entre des plans transversaux à proximité en aval des plans transversaux qui délimitent l'épaisseur de la paroi de passage (e₄) de ladite paroi de passage (4), afin qu'au moins la plupart de ladite épaisseur de cavité (e₅) soit fournie en aval de ladite épaisseur de paroi de passage (e₄).

3. Capsule (1) selon les revendications 1 ou 2,
**caractérisée par le fait que** ladite paroi de passage (4) est délimitée par un premier alignement circonférentiel qui présente un premier diamètre (d₁) 0,35 fois inférieur au diamètre (d) de ladite partie de paroi d'entrée du flux (31) et **par le fait que** ladite région de cavité (5) est délimitée sur un côté distal respectif par un alignement circonférentiel qui présente un second diamètre (d₂), où le second diamètre (d₂) est au moins 1,2 fois supérieur, de préférence, au moins 1,4 fois supérieur, et au plus, 2,5 fois supérieur, de préférence, au plus 2 fois supérieur au dit premier diamètre (d₁).

4. Capsule (1) selon les revendications 1 à 3, **caractérisée par le fait que** l'extension radiale de ladite région de cavité (5) est similaire, de préférence 0,8 fois supérieure et 1,2 fois inférieure à l'extension radiale de ladite région intercalaire (6) .

5. Capsule (1) selon une quelconque revendication entre 1 et 4, **caractérisée par le fait que** ladite région de cavité (5) présente une section transversale substantiellement polygonale qui définit au moins trois surfaces intérieures, de préférence cinq surfaces intérieures, et présentant une profondeur comprise entre 1 et 3 mm, de préférence entre 1,5 et 2,5 mm, par rapport à la surface extérieure dudit second élément de construction (3) et une dimension radiale entre 1 et 3 mm, de préférence entre 1,5 et 2,5 mm.

6. Capsule (1) selon une quelconque revendication précédente entre 1 et 5, **caractérisée par le fait que** ladite région intercalaire (6) présente une épaisseur de paroi intercalaire (e₆) supérieure à l'épaisseur de paroi de passage (e₄) de ladite paroi de passage (4) et supérieure à l'épaisseur de paroi de la cavité (e₅) de ladite région de cavité (5), de préférence elle est au moins approximativement similaire à ladite épaisseur de paroi dominante (e₃₁), renforçant ainsi structurellement la région entourant ladite région du matériau affaibli (41) et fournissant une surface de support à l'élément d'étanchéité (14) fourni sur ledit dispositif de brassage (10).

7. Capsule (1) selon une quelconque revendication précédente entre 1 et 6, **caractérisée par le fait que** la région intercalaire (6) présente une épaisseur de paroi intercalaire (e₆) qui se développe entre des plans transversaux dans la direction axiale en amont et en aval des plans transversaux qui délimitent ladite épaisseur de paroi du passage (e₄) et de l'épaisseur de paroi de la cavité (e₅) .

8. Capsule (1) selon une quelconque revendication précédente entre 1 et 7, **caractérisée par le fait que** ladite région intercalaire (6) comprend une région siège (61) qui se développe sur une surface orientée en amont de ladite partie de paroi d'entrée de flux (31), le long d'au moins une partie de l'extension radiale entre ladite paroi de passage (4) et de ladite région de cavité (5), où ladite région siège (61) est adaptée afin de fournir une surface siège à un élément d'étanchéité (14) fourni sur ledit dispositif de brassage (10).

9. Capsule (1) selon une quelconque revendication précédente entre 1 et 8, **caractérisée par le fait que** ladite région siège (61) présente une épaisseur de paroi siège (e₆₁) supérieure à l'épaisseur de paroi du passage (e₄) de ladite paroi de passage (4), améliorant ainsi l'ouverture de ladite région de matériau affaibli (41) lorsqu'elle est empiétée par un flux pressurisé en amont.

10. Capsule (1) selon une quelconque revendication précédente entre 1 et 9, **caractérisée par le fait que** la région siège (61) présente une épaisseur de paroi siège (e₆₁) qui est supérieure à l'épaisseur de paroi de cavité (e₅) de ladite région de cavité (5), de préférence, elle présente une épaisseur de paroi qui est, au moins, approximativement similaire à ladite épaisseur de paroi dominante (e₃₁).

11. Capsule (1) selon une quelconque revendication précédente entre 1 et 10, **caractérisée par le fait que** ladite région intercalaire (6) présente une projection de guidage (62) le long dudit premier alignement circonférentiel afin que cela délimite ladite région siège (61) par rapport à ladite paroi de passage (4), où ladite projection de guidage (62) se projette au-delà la surface extérieure orientée en amont de ladite partie de paroi d'entrée de flux (31) afin de fournir une surface de conduction adjacente et substantiellement orthogonale ou oblique par rapport à la surface fournie par ladite région siège (61).

12. Système de préparation de produits comestibles, comprenant:
- une capsule (1) selon les revendications 1 à 11, adaptée pour contenir une seule portion de substance comestible, et
- un appareil de préparation de produits comestibles qui a pour base ladite capsule (1) et incluant au moins un dispositif de brassage (10) qui présente deux parties d'actionnement (11, 12),
où ladite capsule (1) présente une partie de paroi d'entrée du flux orientée en amont(31) qui présente une paroi de passage (4) sous forme circulaire et disposée de manière centrée par rapport à un axe axial (X) de ladite capsule (1) et successivement entourée par une région intercalaire (6) et une région de cavité (5),
où lesdites parties d'actionnement (11, 12) sont adaptées afin de collecter ladite capsule (1) et au moins, l'une des dites parties d'actionnement (11, 12) peut être déplacée par rapport à l'autre afin de s'engager avec l'enveloppe extérieure de ladite capsule (1),
où une partie de l'actionnement en amont (11) comprend des moyens d'injection (13) adaptés au piétinement d'un flux de fluide pressurisé sur ladite paroi de passage (4) fournie sur un côté orienté en amont de ladite capsule (1),
où une partie d'actionnement en aval (12) comprend des moyens de décharge adaptés à la collecte d'un breuvage depuis le côté orienté en aval de ladite capsule (1),
où ladite partie d'actionnement en amont (11) présente un élément d'étanchéité (14) et un élément d'engagement (15) adapté afin de coopérer avec les régions respectives de ladite partie de paroi d'entrée de flux (31) de la capsule (1) et
ledit système **se caractérisant**
**par le fait que** la partie d'actionnement en amont (11) présente un élément d'engagement (15) fourni comme une protubérance qui se développe à une certaine distance depuis lesdits moyens d'injection (13) et qui est adapté afin s'engager dans ladite région de cavité (5) fournie sur ladite partie de paroi d'entrée de flux (31), afin de retenir ladite capsule (1) par rapport à un élément d'étanchéité (14) fourni afin d'entourer lesdits moyens d'injection (13).

13. Système selon la revendication 12, **caractérisé par le fait que** ledit élément d'engagement (13) est fourni afin de se développer le long d'une extension en arche d'une circonférence inférieure à 20°, de préférence inférieure à 15° et supérieure à 3°, de préférence supérieure à 5°.

14. Système selon les revendications 12 ou 13, **caractérisé par le fait que** ledit élément d'étanchéité (14) est fourni sous une forme en anneau « O-ring » ou similaire, à proximité des dits moyens d'injection (13) et adapté afin de confiner le flux de fluide pressurisé vers la région adjacente aux moyens d'injection (13), de préférence afin de conduire, en outre, ledit flux pressurisé jusqu'à empiéter ladite paroi de passage (4) fournie dans la cavité par rapport à ladite partie de paroi d'entrée de flux (31).

15. Système selon une quelconque revendication entre 12 et 14, **caractérisé par le fait que** l'élément d'étanchéité (14) est fourni sous une forme d'anneau et est adapté afin de s'assoir dans la région siège (61) de ladite région intercalaire (6) entre ladite paroi de passage (4) et la région de cavité (5).

16. Système selon une quelconque revendication entre 12 et 15, **caractérisé par le fait que** ledit élément d'étanchéité (14) est fourni comme une projection qui se développe le long de la direction axiale avec une extension plus petite que l'extension dudit élément d'engagement (15).
